# EUROPÄISCHE PATENTSCHRIFT

(11) **EP 2 196 269 B1**
(45) Veröffentlichungstag und Bekanntmachung des Hinweises auf die Patenterteilung: **05.09.2012**
(21) Anmeldenummer: 09014827.1
(22) Anmeldetag: 30.11.2009
(51) Int. Cl.: B21D 5/14, B21D 51/26, B23K 11/06

(54) **Vorrund-Element an einem Rundapparat**
Preliminary rounding element on a rounding device
Elément d'arrondissage préalable sur un appareil d'arrondissage

(30) Priorität: 09.12.2008 CH 19292008
(43) Veröffentlichungstag der Anmeldung: 16.06.2010
(73) Patentinhaber: Soudronic AG, 8962 Bergdietikon (CH)
(72) Erfinder: Hug, Peter, 5525 Fischbach-Göslikon (CH); Boissin, Guy, 8951 Fahrweid (CH); Schulthess, Oliver, 8610 Uster (CH)
(74) Vertreter: Schalch, Rainer

(56) Entgegenhaltungen:
- EP-A1- 2 110 191
- WO-A1-2008/144946
- DE-A1- 3 330 171
- US-A- 5 209 625

## Beschreibung

### Hintergrund

Die Erfindung betrifft einen Rundapparat mit einem Vorrund-Element oder einem Rundelement gemäss Oberbegriff des Anspruchs 1 oder des Anspruchs 9, sowie eine Schweissvorrichtung für Dosenzargen mit einem solchen Rundapparat.

### Stand der Technik

Rundapparate werden bei der Herstellung von Behälterzargen, insbesondere Dosenzargen, aus Blech verwendet. Die Behälterzargen-Rohlinge werden dazu nach der Rundung direkt in eine Schweissmaschine zur Schweissung der Längsnaht der Zarge transportiert. Dabei bilden in der Regel die Abstapelung der Bleche, der Rundapparat und die Schweissmaschine eine Einheit. Entsprechende Anlagen für die Dosenherstellung sind z.B. aus DE-A-33 30 171 oder aus US-A-5 209 625 bekannt. Die Rundung erfolgt dabei so, dass die gebildete Dosenzarge direkt in die für die Nahtüberlappung verwendete Z-Schiene geführt werden kann. Für die Rundung werden die rechteckig zugeschnittenen Blechabschnitte mit definierten Abmessungen und in Normen festgehaltenen Materialeigenschaften von einem Einschubsystem in ein erstes, angetriebenes Transportwalzenpaar geschoben, von mehreren angetriebenen Transportwalzen mit einer Geschwindigkeit von 100-450m/Min weitertransportiert und in einem Rundapparat mit einem Rundsystem mit Hilfe von Keilen und Walzen oder mit Walzensystemen zu einer runden Zarge gebogen. Insbesondere kommt vor den Rundwalzen ein Vorrund-Keil zur Anwendung, welcher das Rundungsergebnis beeinflusst. Eventuell erfolgt zusätzlich mittels eines Keilsystems einer optionalen Flexer-station eine vorgängige plastische Verformung, welche dem Spannungsabbau im Blech vor der Rundung dient. Derartige Rundapparate bzw. Anlagen sind dem Fachmann bekannt. Je nach Blechqualität weisen die in Serie verarbeiteten Bleche unterschiedliche Blechdicken und Materialeigenschaften, wie Streckgrenze, Dehnungs- und Verfestigungsverhalten auf, welche nach dem Rundprozess zu unterschiedlichen Zargenradien und dadurch unterschiedlichen Öffnungen an den freien Enden führen. Da dadurch nicht alle in Serie gerundeten Zargen in der gleichen Position in der Rundstation liegen und sie unterschiedliche Rundungsradien aufweisen, kann dies Variationen des Überlappungsmasses in der Schweissstation zur Folge haben, was für die Schweissung der Zarge problematisch ist, oder zu Problemen beim seitlichen Ausschieben der Zargen aus der Rundmaschine in die Schweisseinrichtung und dadurch zu einem Maschinenstopp mit längeren Ausfallzeiten führen. Die Effizienz der Maschine wird dadurch vermindert und es entstehen Ausfallkosten für den Maschinenbetreiber.

Die Einstellung des Vorrund-Keils wird nach Stand der Technik manuell vorgenommen und ist abhängig von den erwähnten Blecheigenschaften, wie Streckgrenze, Blechdicke und auch von der Formatgrösse der Bleche. Wird mit verschiedenen Blechqualitäten gearbeitet, so muss der Vorrund-Keil im Stillstand des Rundapparates jeweils neu justiert werden. Zur Vermeidung der genannten Probleme beim Runden und Schweissen von Dosenzargen werden Bleche mit geringen Materialeigenschaftsschwankungen und aus einer Herstellungsserie des Blechherstellers verwendet. Eine Durchmischung verschiedener Bleche wird möglichst vermieden. Die Rundung muss häufig überprüft und bei Bedarf das Rundsystem und insbesondere der Vorrund-Keil nachjustiert werden, was im Stillstand zu erfolgen hat und die Effizienz des Rundapparates und nachfolgender Schritte vermindert und Ausfallkosten für den Maschinenbetreiber ergibt. Im Betrieb kann die eingestellte Vorrundung oder Rundung mittels des Vorrund-Elements und/oder des Rundelements durch die unterschiedliche Kraft, welche die Bleche auf das Element ausüben, schwanken. In der CH-Patentanmeldung Nr. 0608/08 spälter Veröffentlicht unter der Na. EP-A-2110 191 (Artikel 54(3) EPÜ Dokument) wird ein Vorrund-Element mit einem Betätigungselement vorgeschlagen, welches diese Nachteile vermeiden kann.

### Darstellung der Erfindung

Es ist Aufgabe der Erfindung einen solchen Rundapparat zu verbessern.

Dies wird mit einem Rundapparat gemäss Anspruch 1 und/oder Anspruch 9 erzielt, das die Änderung der Beaufschlagung des zu rundenden Bleches im Betrieb erlaubt und dabei die eingestellte Einwirkung auf das Blech möglichst konstant hält.

Das Vorrund-Element oder Rundelement des Rundapparats ist mit einem Festkörpergelenk versehen, was einen besonders einfachen Aufbau ergibt. Das Festkörpergelenk arbeitet spielfrei und verschleissfrei. Das Festkörpergelenk ist dabei so ausgebildet, dass sich eine weit gehend gleichmässige Auslenkung durch das Betätigungselement ergibt. Dies ergibt eine gleichmässige Einwirkung des Elements auf das Blech und damit ein gutes und gleichmässiges Rundungsergebnis.

Gemäss einem weiteren Aspekt der Erfindung ist das Vorrund-Element oder das Rundelement durch die beanspruchten Merkmale so aufgebaut, dass sich sein Unterteil in Längsrichtung bei der Einwirkung auf das Blech möglichst wenig verbiegt. Dies ergibt eine gleichmässige Einwirkung des Elements auf das Blech und damit ein gutes und gleichmässiges Rundungsergebnis.

Bei einer Schweissvorrichtung gemäss der Erfindung wird ein entsprechender Rundapparat verwendet.

### Kurze Beschreibung der Zeichnungen

Ausgestaltungen, Vorteile und Anwendungen der Erfindung ergeben sich aus den abhängigen Ansprüchen und aus der nun folgenden Beschreibung anhand der Figuren. Dabei zeigt
Figur 1 eine Seitenansicht eines Vorrund-Elements zur generellen Erläuterung von dessen Aufbau;
Figur 2 schematisch die Anordnung eines Vorrund-Elements in einem erfindungsgemässen Rundapparat;
Figur 3 eine schaubildliche Ansicht einer Ausführungsform eines Vorrund-Elements;
Figur 4 eine Seitenansicht des Vorrund-Elements von Figur 3;
Figur 5 eine Vertikalschnittansicht des Vorrund-Elements von Figur 3 bzw. Figur 4;
Figur 6 eine rückseitige Ansicht eines Vorrund-Elements;
Figur 7 eine Vertikalschnittansicht durch einen Teil einer weiteren Ausführungsform eines Vorrund-Elements; und
Figur 8 eine Horizontalschnittansicht durch die Ausführung nach Anspruch 7.

### Wege zur Ausführung der Erfindung

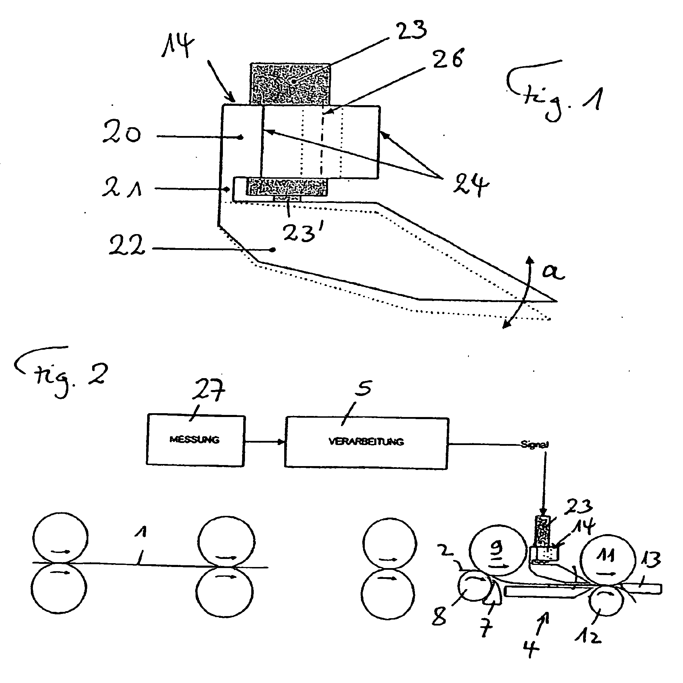

Figur 1 zeigt in Seitenansicht ein Vorrund-Element 14. Dessen Einsatz in einem Rundapparat 4 ist schematisch in Figur 2 dargestellt. Auch das Rundelement 13 des Rundapparates 4 kann gemäss den Aspekten der Erfindung ausgestaltet sein. In den nachfolgenden Beispielen werden diese an Hand eines Vorrund-Elements beschrieben, die entsprechende Ausführung und Verwendung als Rundelement ist dabei aber mit umfasst.

Das Vorrund-Element 14, welches in der gezeigten Ausführung ein Vorrund-Keil ist, da dessen auf das jeweilige Blech einwirkende Unterteil 22 in seinem vorderen Bereich keilförmig ist, weist ein starres bzw. im Betrieb feststehendes Element-Oberteil 20 auf. Dies ist in dieser Ausführung ein Teil 20, welches zur Befestigung an einem Maschinenteil des Rundapparates ausgeführt ist und im gezeigten Beispiel beidseitig Befestigungsmittel, z.B. Bohrungen 26 und Führungen 24 aufweist, die die Befestigung am Rundapparat erlauben und eine vertikale Grundeinstellung an diesem ermöglichen. Der am Rundapparat maschinenfeste Oberteil 20 könnte auch direkt ein fixer Teil des Rundapparates sein. Eine alternative Befestigung kann über vertikale Gewindestangen zur Höheneinstellung und mindestens eine vertikale Führung erfolgen und eine Festlegung mit mindestens einer horizontalen Schraube, welche das Teil 20 gegen die vertikale Führung zieht.

Am Teil 20 bzw. am Element-Oberteil ist über eine Gelenkanordnung 21 der auslenkbare Element-Unterteil 22 bzw. Keilunterteil 22 angeordnet. Die Auslenkung ist durch einen Pfeil a dargestellt. Die Auslenkung wird durch ein Betätigungselement 23 ermöglicht, welches nachfolgend auch als Aktor bezeichnet wird. Der Aktor ist mit seinem ruhenden Teil im Oberteil 20 fest angeordnet und der bewegliche, betätigbare Teil 23' des Aktors wirkt auf den Keilunterteil 22; alternativ ist der bewegliche Teil im Oberteil fixiert und der andere Teil des Aktors wirkt auf den Keilunterteil. Drückt dabei der Teil 23' in der Figur nach unten, so wird der Keilunterteil 22 so ausgelenkt, dass er bei maximaler Auslenkung die punktiert gezeichnete Stellung einnehmen kann. Ist der betätigbare Teil 23' des Aktors 23 in Ruhestellung, so wird die mit durchgezogener Linie gezeigte Stellung des Keils 22 erzielt. Je nach Kraft oder Auslenkung, die der Aktor auf den Keil 22 ausübt, ergibt sich eine Zwischenstellung zwischen den gezeigten Positionen. Der Aktor könnte das Teil 22 auch nach oben ziehen. Zum Beispiel kann dann eine Mittelstellung zwischen den beiden gezeigten Stellungen die nicht ausgelenkte Stellung sein.

Die den Oberteil 20 und den Keil 22 verbindende Gelenkanordnung ist in diesem Beispiel ein Festkörpergelenk, das aus einem passend dimensionierten Festkörperteil besteht, der durch die Kraft des Aktors 23 elastisch verformt wird. Entsprechend ergibt sich eine Rückstellung, wenn die Kraft des Aktors oder seine Auslenkung reduziert wird. Die Rückstellkraft kann aber auch durch den Aktor erzeugt werden. Bevorzugt ist die Gelenkanordnung 21 als Festkörpergelenk einstückig mit dem Oberteil 20 und dem Unterteil 22 ausgeführt, wie dies in der Figur 1 dargestellt ist. Der Aktor 23 kann ein beliebiger steuerbarer Antrieb sein. Bevorzugt ist ein piezoelektrischer Aktor, da nur kleine Auslenkungen erforderlich sind und eine schnelle Reaktionszeit vorteilhaft ist. Auch andere steuerbare Antriebe, so elektromotorische Antriebe, magnetische Antriebe oder ein pneumatischer Antrieb oder ein hydraulischer Antrieb sind als Betätigungselement 23 einsetzbar.

Figur 2 zeigt schematisch die Zuführung eines Bleches 1 zu einem Rundapparat 4, in welchem sich ein weiteres Blech 2 bereits in Rundung befindet. Die Bleche sind von einem hier nicht dargestellten Stapel abgestapelt worden und werden durchlaufend durch den Rundapparat gerundet. Die Zufuhr in den Rundapparat erfolgt mittels eines Transports, z.B. mit den dargestellten Walzen. Im Rundapparat kann eine Flexerstation mit Flexerwalzen 8 und 9 und einem Flexerkeil 7 vorgesehen sein. Solche Flexerstationen sind bekannt und entfernen einerseits Spannungen aus dem Blech und erzielen andererseits eine Rundung des vorderen Kantenbereichs des jeweiligen Bleches. Insbesondere kann eine nachfolgend näher erläuterte Messeinrichtung, zum Beispiel zur Messung der Rundungseigenschaft des jeweiligen Bleches, an die Flexerstation anschliessen bzw. Teil derselben sein. Auf die Flexerstation folgend ist die eigentliche Rundungsstation des Rundapparates 4 schematisch dargestellt. Diese weist die Rundwalzen 11 und 12 und einen in Transportrichtung darauf folgenden Rundkeil 13 auf. Diese Elemente sind grundsätzlich bekannt und werden hier nicht weiter erläutert. Anstelle einer solchen Rundungsstation kann auch eine andere Art der Rundungsstation treten, z.B. eine Rundungsstation ohne Rundkeil und mit versetzten Walzen. Diese Art ist dem Fachmann bekannt und wird hier nicht näher erläutert.

In dem erfindungsgemässen Rundapparat ist vor den Rundwalzen das Vorrund-Element 14 angeordnet und beaufschlagt das zu rundende Blech. Dies erfolgt gemäss der Erfindung durch den im Rundungsbetrieb auslenkbaren Element-Unterteil 22. Somit kann während der Rundung auf jedes Blech individuell durch das Vorrund-Element 14 eingewirkt werden und es kann das Rundungsergebnis für jedes Blech beeinflusst werden. Dabei wird der Aktor 23 durch ein Signal gesteuert, das aus einer Steuerung 5 stammt. Dies kann die Steuerung des Rundapparates sein oder die Steuerung einer Schweissvorrichtung für Behälterzargen, welche den Rundapparat 4 enthält. Die Steuerung 5 kann aber auch eine separate Steuerung sein, welche allenfalls mit den genannten Steuerungen zusammen arbeitet. Die Steuerung des Vorrund-Elementes 14 erfolgt dabei zum Beispiel im Sinne einer Voreinstellung durch die Bedienungsperson des Rundapparates, indem diese eine bestimmte Auslenkung des Unterteils 22 über die Steuerung 5 vorgibt. Diese wird dann für alle Bleche eingehalten, bis die Bedienungsperson eine andere Auslenkung einstellt. Die Auslenkung kann andererseits auch von der Steuerung 5 aus gespeicherten Vorgabewerten gewählt werden. Die Bedienungsperson gibt dann z.B. das Blechformat und/oder das Blechmaterial und/oder die Blechdicke und/oder eine Codebezeichnung ein und die Steuerung wählt dazu aus gespeicherten Werten die entsprechende Auslenkung des Element-Unterteils 22 aus. In einer bevorzugten Ausführung erfolgt die Messung mindestens einer Blecheigenschaft durch mindestens eine Messeinrichtung 27 und der Messwert veranlasst die Steuerung 5 zur Einstellung des Aktors 23 bzw. die Auslenkung des Element-Unterteils 22. Die Messung kann dabei bevorzugt für jedes Blech erfolgen und somit kann das Vorrund-Element individuell für jedes Blech der Abfolge von zu rundenden Bleche eingestellt bzw. gesteuert werden. Die Messung kann aber auch nur für einzelne Bleche, z.B. jedes 10. Blech erfolgen oder nur für ein Blech einer Menge von Blechen, z.B. das erste Blech eines Blechstapels. Als Messwert kann z.B. die Blechdicke gemessen werden. Entsprechende Messeinrichtungen sind bekannt und werden hier nicht weiter erläutert. Bevorzugt wird das Rundungsverhalten des Bleches gemessen und für die Steuerung des Vorrund-Elementes 14 verwendet, was nachfolgend genauer erläutert wird.

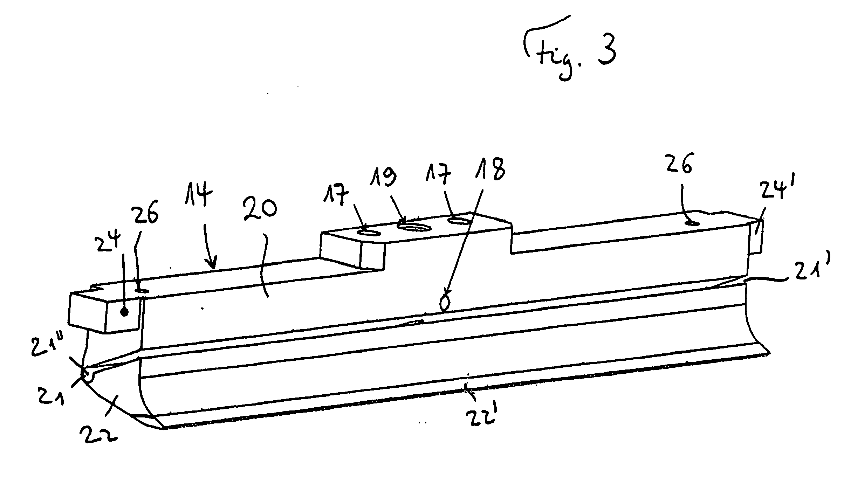

Die Figuren 3 bis 6 zeigen eine Ausführungsform eines Elements 14, bei welcher beide Aspekte der Erfindung vorgesehen sind. Einerseits ist das Gelenk 21 so ausgeführt, dass sein Widerstandsmoment gegen die Auslenkung entlang seiner Längserstreckung unterschiedlich ist. Andererseits ist der Trennspalt 21' zwischen dem Oberteil 20 und dem Unterteil 22 nicht in Horizontalrichtung verlaufend ausgeführt (also nicht wie in Figur 1 gezeigt) und die dem Gelenk gegenüberliegende Öffnung des Trennspalts 21' liegt oberhalb des Gelenks 21. Diese Aspekte werden nachfolgend genauer erläutert.

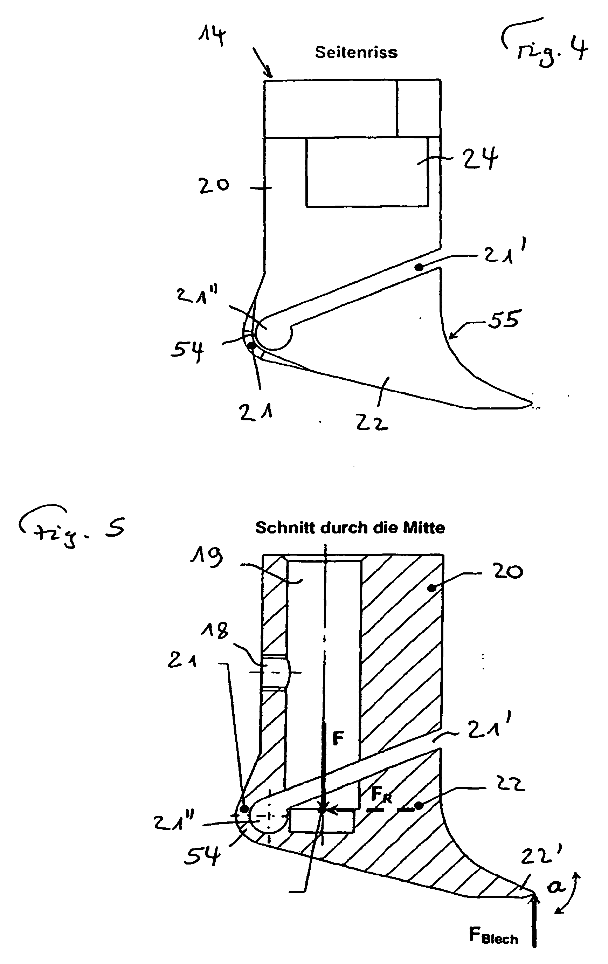

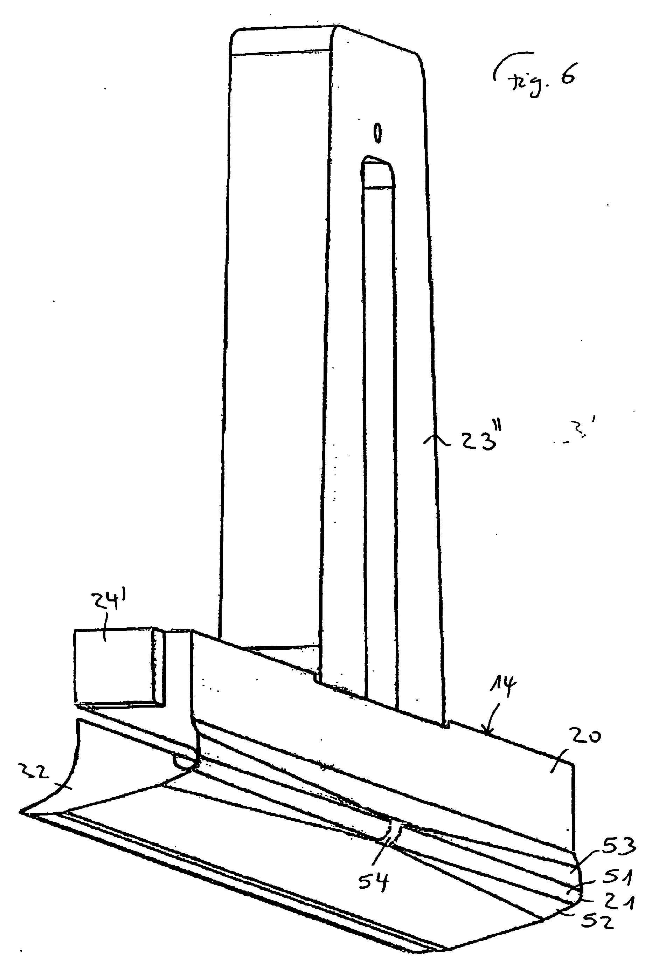

Die schaubildliche Ansicht des Vorrund-Elements 14 zeigt dieses Element mit dem Oberteil 20 und dem Unterteil 22, welche über das Gelenk 21 verbunden sind. Dies ist ein Festkörpergelenk, welches in diesem Beispiel durch einstückige Ausführung des Oberteils 20 und des Unterteil 22 ausgeführt sein kann. Das Festkörpergelenk kann aber auch auf andere Weise ausgeführt sein, z.B. durch eine Blattfederanordnung. Die Einstückigkeit bezieht sich allenfalls auch nur auf die Verbindung zwischen Oberteil 20 und Unterteil 22. Das Unterteil 22 kann selber mehrstückig ausgeführt sein, insbesondere kann die eigentliche Keilspitze 22' des Vorrund-Elements 14 aus einem anderen Material bestehen, als der Unterteil 22. Dabei wird für die Keilspitze 22' insbesondere ein verschleissfesteres, härteres Material gewählt werden als für den Unterteil 22. Die Verbindung der Teile 22 und 22' kann durch Schweissung, Klebung oder auf andere Weise erfolgen. Bei einer bevorzugten Ausführung sind der hintere Teil des Keils und der vordere Teil des Keils miteinander verschraubt, was den Austausch des vorderen Teils erlaubt, sei es infolge Verschleisses oder zur Änderung der Keilform. Ersichtlich sind in der Figur 3 die bereits erwähnten seitlichen Führungen 24 und 24' des Elements 4 sowie die Bohrungen 26, insbesondere Gewindebohrungen, zur vertikalen Fixierung des Elements 14 an der Rundmaschine; wie erläutert, kann aber auch eine andere Befestigung gewählt werden. In den Figuren 3, 4 und 5 ist das Betätigungselement 23 nicht dargestellt. Dies ist in dieser Ausführung so vorgesehen, dass es oberhalb des Oberteils 20 mittels der Gewindebohrungen 17 an diesem befestigt wird, so dass der in Figur 1 angedeutete Stössel 23' durch die Ausnehmung bzw. Führung 19 hindurch hinab zum Unterteil 22 geführt wird. Eine horizontale Gewindebohrung 18, welche auf der Vorderseite angeordnete sein kann, wie in Figur 3 gezeigt oder an der Hinterseite, wie in Figur 5 gezeigt, dient zur Einbringung eines Gewindebolzens, welcher zur Ausrichtung des Stössels 23' dienen kann. Der Stössel des Aktors kann aber auch auf andere Weise geführt sein. In Figur 6 ist oberhalb des Oberteils 20 eine Halterung 23" für den Aktor ersichtlich, welcher selber in der Figur nicht dargestellt ist.

In Figur 3 ist das eine Ende des Festkörpergelenks 21 ersichtlich. Dieses Gelenk erstreckt sich bevorzugt ohne Unterbruch über die gesamte Länge des Vorrund-Elements 14. Allenfalls kann das Gelenk auch Unterbrüche aufweisen. Es ist in Figur 3 und insbesondere auch in Figur 4, welche eine Draufsicht auf die in Figur 3 ersichtliche Seite des Elements 14 mit der Führung 24 zeigt, das die Materialstärke des Gelenks 21 am Ende gering ist. Dies ist in der Seitenansicht von Figur 4 durch die mit 54 dargestellte geringe Materialdicke ersichtlich. Figur 5 hingegen zeigt einen Vertikalschnitt durch die Mitte des Elements 14 und somit durch die Führung 19, wobei ersichtlich ist, dass dort die Materialdicke 54 des Gelenkes grösser ist. Zum anderen seitlichen Ende mit der Führung 24' hin nimmt die Materialdicke des Gelenkes 21 dann wieder ab, bis sie auch an diesem seitlichen Ende so gering ist, wie in Figur 4 gezeigt. Bei diesem Vorrund-Element 14, bei welchem die Krafteinleitung durch das Betätigungselement mittig erfolgt, was eine bevorzugte Ausführung ist, wird durch die von der Mitte her seitlich nach aussen abnehmende Materialdicke des Gelenkes bei dessen Biegung durch den Aktor eine gleichmässigere Auslenkung des Unterteils 22 über die ganze Länge des Vorrund-Elements erzielt als dies ohne diese Massnahme der Fall wäre. Dies ergibt eine gleichmässigere Einwirkung des Unterteils 22 auf das zu rundende Blech und damit ein verbessertes Rundungsergebnis. Figur 5 zeigt die Krafteinleitung, wobei die Kraft F, welche von dem Betätigungselement aufgebracht wird, die Auslenkung a des Unterteils 22 bewirkt. An derjenigen Stelle des Vorrund-Elements 14, an welcher die Krafteinleitung durch das Betätigungselement erfolgt, wird das Gelenk 21 durch die Materialstärkenwahl so ausgeführt, dass dort das Biegewiderstandselement am grössten ist und sich mit Abstand von der Krafteinleitungsstelle reduziert. Dies kann auf die gezeigte Weise durch Reduktion der Materialdicke bzw. des Gelenkquerschnittes mit zunehmendem Abstand von der Krafteinleitungsstelle erfolgen. Dies könnte auch durch eine Änderung eines anderen Materialparameters des Festkörpergelenkes erfolgen, so z.B. durch die Ausführung des Festkörpergelenkes in Abschnitten aus verschiedenen Materialien, welche ein unterschiedliches Widerstandsmoment gegen die Biegung aufweisen.

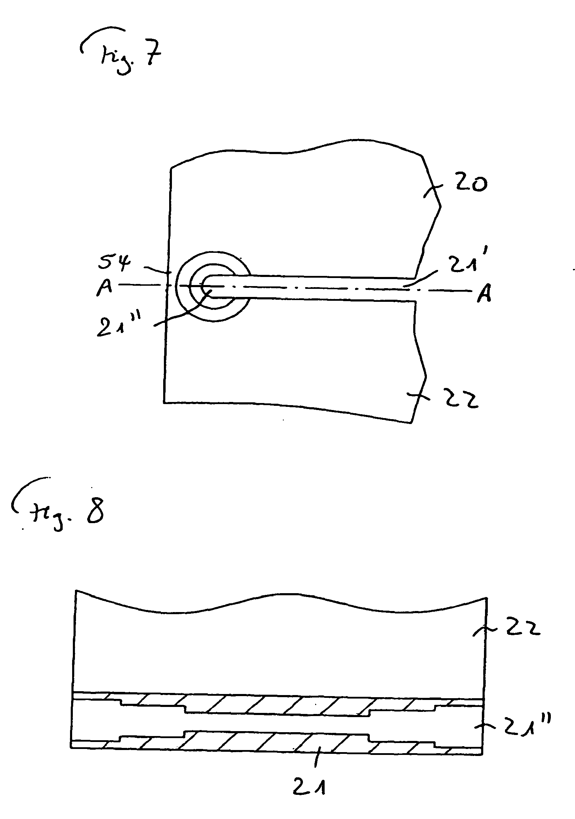

Die Ausführung der Änderung der Materialdicke kann z.B. von der Aussenseite her des Elementes 14 erfolgen, wie das im Ausführungsbeispiel der Figuren 3 bis 6 dargestellt ist. Darin ist ersichtlich, dass die Materialdicke des Festkörpergelenks von der in diesem Ausführungsbeispiel mittigen Krafteinleitungsstelle zu den Seiten hin dadurch abnimmt, dass auf der Aussenseite rückseitig mindestens eine Materialabtragung 51 vorgesehen ist, welche zu den beiden Seiten hin die Materialdicke des Festkörpergelenkes reduziert. Vorzugsweise sind weitere Abtragungen 52 und 53 vorgesehen, so dass sich eine facettenartige Materialabtragung auf der Rückseite ergibt. Eine aussenseitige Änderung der Materialdicke ergibt sich ebenfalls, wenn das Festkörpergelenk von einem Blattfederpaket gebildet wird und dieses an der Krafteinleitungsstelle mehr Federblätter aufweist als zu den Seiten des Elements 14 hin. Die unterschiedliche Materialstärke 54 kann auch durch unterschiedliche Durchmesser einer Ausnehmung 21", insbesondere einer Bohrung, ausgeführt werden, welche das Festkörpergelenk definiert; anstelle eines Bohrvorganges kann dabei auch eine andere Bearbeitung, wie z.B. Fräsen, treten. Das Vorsehen einer solchen Ausnehmung ist in den Figuren 7 und 8 dargestellt, in welchen nur der Gelenkteil des Vorrund-Elements 14 dargestellt ist. In Figur 7 ist dabei ein Abschnitt des Oberteils 20 und ein Abschnitt des Unterteils 22 in Seitenansicht dargestellt und es ist ersichtlich, dass die Ausnehmung 21", insbesondere Bohrung, welche das Gelenk 21 definiert, eine stufige Ausnehmung bzw. eine Stufenbohrung ist. Dies ist in der Horizontalschnittansicht mit der Schnittlinie A-A von Figur 7 in Figur 8 dargestellt. Diese zeigt einen Abschnitt des Unterteils 22 und die Bohrung 21" des Gelenks, welche abschnittsweise zur Mitte des Gelenks hin einen geringeren Durchmesser aufweist. Damit nimmt die Materialstärke des Festkörpergelenks zur Mitte hin zu bzw. zu den Seiten hin ab. Anstelle einer Stufenbohrung könnte auch eine konische Ausgestaltung der Bohrung vorgesehen sein. Die Ausnehmung kann auch auf andere Weise gebildet werden, z.B. durch einen Schlitz mit einem einseitigen Radius.

Die gezeigten Beispiele gehen von einer mittigen Krafteinleitung aus und damit einem verminderten Biegewiderstandsmoment zu den Seiten des Elements 14 hin. Dies könnte auch anders ausgeführt sein, indem die Krafteinleitung an beiden Seiten erfolgt und somit das Biegewiderstandsmoment bzw. die grössere Materialstärke an den Seiten vorgesehen ist. Die Materialstärke würde dann zur Mitte hin abnehmend ausgeführt. Die Beispiele platzieren das Gelenk auch an der Hinterseite des Elements 14; dies ist aber nicht zwingend, das Gelenk kann auch an der Vorderseite des Elements 14 oder in dessen Mitte oder in anderen Zwischenlagen zwischen der Hinterseite oder der Vorderseite angeordnet sein.

In den Figuren 3 bis 6 ist der zweite Aspekt der Erfindung ersichtlich, wonach der Trennspalt 21' zwischen dem Oberteil 20 und dem Unterteil 22 abweichend von der Horizontalrichtung verläuft. Wie bereits erwähnt, wirkt auf den Unterteil 22 die Kraft F des Betätigungselementes. Während des Rundprozesses wirkt auf den Unterteil 22 ferner die Widerstandskraft F_{Blech}. Diese beiden Kräfte bewirken eine Verformung des Unterteils, insbesondere der Keilspitzenkante 22'. Durch den von der Horizontalen abweichenden Verlauf des Trennspaltes 21' weist der Unterteil 22 des Elements 14 ein grösseres Volumen und damit ein grösseres Biegewiderstandsmoment gegen die Durchbiegung der Kante 22' auf. Durch die Verminderung dieser Biegung ergibt sich ein besseres Rundungsergebnis. Der Trennspalt 21' verläuft bevorzugt schräg zur Horizontalrichtung und insbesondere geradlinig, was eine einfache Herstellung ergibt. Die Abweichung von der Horizontallage ist dabei bei bestimmungsgemäss eingebautem Element 14 bzw. dem durch die Befestigungsmittel in seiner Einbaulage gehaltenem Element zu sehen. Weiter ist es bevorzugt, dass die der Rundwalze 11 des Rundapparates 4 zugewandte Fläche 55 des Elements 22 einen konkav gerundeten und insbesondere im Wesentlichen zylindermantelförmigen Abschnitt aufweist. Diese Form wirkt sich ebenfalls reduzierend auf die Durchbiegung auf. Anstelle einer Rundung können auch mehrere schräge ebene Flächen vorgesehen sein, die einer Rundung im Wesentlichen gleichkommen.

## Patentansprüche

1. Rundapparat (4) zur Herstellung von Behälterzargen, mit einem Vorrund-Element (14) oder Rundelement (13) umfassend einen im Wesentlichen starren Element-Oberteil (20), welcher mit Befestigungsmitteln (26) zur Befestigung am Rundapparat ausgestaltet ist, oder welcher von einem apparatefesten Teil des Rundapparates gebildet ist, einen zur Einwirkung auf die im Rundapparat zu rundenden Bleche bestimmten Element-Unterteil (22), eine Gelenkanordnung (21), durch welche das Element-Unterteil gelenkig mit dem Element-Oberteil verbunden ist, sowie mindestens ein Betätigungselement (23), durch welches das Element-Unterteil derart auslenkbar ist, dass durch dieses zu rundende Bleche unterschiedlich beaufschlagbar sind, **dadurch gekennzeichnet, dass** die Gelenkanordnung ein Festkörpergelenk aufweist, welches Element-Oberteil (20) und Element-Unterteil im Wesentlichen durchgehend verbindet und entlang seiner Längserstreckung Bereiche mit unterschiedlichem Biegewiderstandsmoment für die Auslenkbewegung aufweist, insbesondere als Bereiche mit unterschiedlicher Materialstärke, wobei das Biegewiderstandsmoment, bzw. die Materialstärke, im Bereich der Krafteinleitungsstelle des Betätigungselements auf das Element-Unterteil am grössten ist.

2. Rundapparat nach Anspruch 1, **dadurch gekennzeichnet, dass** sich das Biegewiderstandsmoment bzw. die Materialstärke im Wesentlichen kontinuierlich ändert.

3. Rundapparat nach Anspruch 1, **dadurch gekennzeichnet, dass** sich das Biegewiderstandsmoment bzw. die Materialstärke, schrittweise ändert.

4. Rundapparat nach einem der Ansprüche 1 bis 3, **dadurch gekennzeichnet, dass** das Biegewiderstandsmoment bzw. die Materialstärke in der Mitte der Längserstreckung des Gelenks am grössten ist.

5. Rundapparat nach einem der Ansprüche 1 bis 4, **dadurch gekennzeichnet, dass** die Materialstärke durch eine äussere Materialabtragung (51, 52, 53) am Element reduziert ist.

6. Rundapparat nach einem der Ansprüche 1 bis 5, **dadurch gekennzeichnet, dass** die Materialstärke durch eine innere Materialabtragung im Element reduziert ist, insbesondere durch eine gestufte Ausnehmung oder eine konische Ausnehmung.

7. Rundapparat nach einem der Ansprüche 1 bis 6, **dadurch gekennzeichnet, dass** das Element-Oberteil und das Element-Unterteil einstückig miteinander verbunden sind.

8. Rundapparat nach Anspruch 3, **dadurch gekennzeichnet, dass** das Element-Oberteil und das Element-Unterteil über eine Blattfederanordnung miteinander verbunden sind.

9. Rundapparat mit einem Vorrund-Element (14) oder Rundelement (13) umfassend einen im Wesentlichen starren Element-Oberteil (20), welcher mit Befestigungsmitteln (26) zur Befestigung am Rundapparat ausgestaltet ist, oder welcher von einem apparatefesten Teil des Rundapparates gebildet ist, einen zur Einwirkung auf die im Rundapparat zu rundenden Bleche bestimmten Element-Unterteil (22), eine Gelenkanordnung (21), durch welche das Element-Unterteil gelenkig mit dem Element-Oberteil verbunden ist, sowie mindestens ein Betätigungselement (23), durch welches das Element-Unterteil derart auslenkbar ist, dass durch dieses zu rundende Bleche unterschiedlich beaufschlagbar sind, insbesondere nach einem der Ansprüche 1 bis 8, **dadurch gekennzeichnet, dass** der an das Gelenk der Gelenkanordung anschliessende Trennspalt (21') zwischen Element-Oberteil (20) und Element-Unterteil (22) abweichend von der Horizontalrichtung verläuft und das dem Gelenk gegenüberliegende Ende des Trennspalts auf die Horizontalrichtung bezogen oberhalb des Gelenks liegt, wobei der Trennspalt schräg zur Horizontalrichtung verläuft.

10. Rundapparat (13) nach einem der Ansprüche 1 bis 9, **dadurch gekennzeichnet, dass** die der Rundwalze (11) des Rundapparates (4) zugewandte Fläche des Elements einen Abschnitt mit konkaver Form (55) und insbesondere eine konkav gerundete und insbesondere eine im Wesentlichen zylindermantelförmige Form (55) aufweist.

11. Rundapparat (4) nach einem der Ansprüche 1 bis 10, weiter umfassend einer Steuerung (5) zur Betätigung des Vorrund-Elementes in Abhängigkeit von einem Eingabewert und/oder Vorgabewert oder in Abhängigkeit von einem Messwert der Blecheigenschaft einzelner zu rundender Bleche.

12. Schweissvorrichtung für Dosenzargen, mit einer Z-Schiene zur Positionierung der Zargenkanten und mit Schweissrollen, insbesondere mit darauf laufenden Drahtzwischenelektroden, umfassend einen Rundapparat nach einem der Ansprüche 1 bis 11.

## Claims

1. Rounding apparatus (4) for manufacturing container bodies, with a pre-rounding element (14) or rounding element (13) comprising a substantially fixed upper element part (20) having attachment means (26) for attaching it to the rounding apparatus, or which is formed by a fixed part of the rounding apparatus, a lower element part (22) for acting upon metal sheets to be rounded in the rounding apparatus, an articulation arrangement (21) by means of which the lower element part is coupled to the upper element part in an articulated way, as well as at least an actuation element (23), by means of which the lower element part can be deflected in such a way that it can act upon metal sheets to be rounded in different ways, **characterized in that** the articulation arrangement has a flexure hinge connecting the upper element part (20) and the lower element part in a substantially continuous way and having areas, along its longitudinal extension, with different resistances to bending for the deflection motion, particularly areas with different material thicknesses, wherein the resistance to bending or the material thickness respectively is highest in the area of the position of introduction of force of the actuation element to the lower element part.

2. Rounding apparatus according to claim 1, **characterized in that** the resistance to bending or the material thickness respectively changes substantially continually.

3. Rounding apparatus according to claim 1, **characterized in that** the resistance to bending or the material thickness respectively changes substantially gradually.

4. Rounding apparatus according to one of the claims 1 to 3, **characterized in that** the resistance to bending or the material thickness respectively is highest in the middle of the longitudinal extension of the articulation.

5. Rounding apparatus according to one of the claims 1 to 4, **characterized in that** the material thickness is reduced by an outer material abrasion (51, 52, 53) at the element.

6. Rounding apparatus according to one of the claims 1 to 5, **characterized in that** the material thickness is reduced by an inner material abrasion in the element, particularly by a stepwise clearance or a conic clearance.

7. Rounding apparatus according to one of the claims 1 to 6, **characterized in that** the upper element part and the lower element part are mutually coupled in one piece.

8. Rounding apparatus according to one of the claim 3, **characterized in that** the upper element part and the lower element part are mutually coupled by a leaf spring arrangement.

9. Rounding apparatus with a pre-rounding element (14) or rounding element (13) comprising a substantially fixed upper element part (20) having attachment means for attaching it to the rounding apparatus, or which is formed by a fixed part of the rounding apparatus, a lower element part (22) for acting upon metal sheets to be rounded in the rounding apparatus, an articulation arrangement (21) by means of which the lower element part is coupled to the upper element part in an articulated way, as well as at least an actuation element (23), by means of which the lower element part can be deflected in such a way that it can act upon metal sheets to be rounded in different ways, particularly according to one of the claims 1 to 8, **characterized in that** the separating gap (21') between the upper element part (20) and the lower element part (22), which follows the articulation of the articulation arrangement, runs in a deviating way with respect to the horizontal direction and the end of the separating gap opposite of the articulation is located above the articulation with respect to the horizontal direction, wherein the separating gap runs obliquely with respect to the horizontal direction.

10. Rounding apparatus (13) according to one of the claims 1 to 9, **characterized in that** the surface of the element facing the rounding roller (11) of the rounding apparatus (4) has a section with a concave shape (55) and particularly a concavely rounded and particularly cylinder-envelope-shaped shape (55).

11. Rounding apparatus (4) according to one of the claims 1 to 10, further comprising a controller (5) for actuating the pre-rounding element depending on an input value and/or setpoint value or depending on a measurement value of the sheet metal characteristic of individual sheet metal pieces to be rounded.

12. Welding device for can bodies, with a Z-rail for positioning the body edges and with welding rollers, particularly with intermediary wire electrodes, comprising a rounding apparatus according to one of the claims 1 to 11.

## Revendications

1. Appareil de cintrage (4) pour la fabrication de corps de boîte, avec un élément de pré-cintrage (14) ou un élément de cintrage (13) comprenant une partie supérieure de l'élément (20) essentiellement fixe ayant des moyens de fixation (26) pour la fixation à l'appareil de cintrage, ou étant formée par une partie fixe de l'appareil de cintrage, une partie inférieure de l'élément (22) pour agir sur des tôles à cintrer dans l'appareil de cintrage, un arrangement d'articulation (21) à l'aide duquel la partie inférieure de l'élément est couplée de manière articulée avec la partie supérieure de l'élément, et aussi un élément d'actionnement (23) à l'aide duquel la partie inférieure de l'élément peut être déviée de sorte à permettre de pressuriser différemment les tôles à cintrer, **caractérisé en ce que** l'arrangement d'articulation a une articulation à corps solide couplant la partie supérieure de l'élément (20) et la partie inférieure de l'élément essentiellement de manière continue et ayant, le long de son extension longitudinale, des sections avec des différentes résistances à la flexion pour le mouvement de déviation, particulièrement des sections avec des différentes épaisseurs de matériau, la résistance à la flexion ou bien l'épaisseur de matériau étant le plus élevée dans la zone d'introduction de force de l'élément d'actionnement sur la partie inférieure de l'élément.

2. Appareil de cintrage selon la revendication 1, **caractérisé en ce que** la résistance à la flexion ou bien l'épaisseur de matériau change essentiellement de manière continue.

3. Appareil de cintrage selon la revendication 1, **caractérisé en ce que** la résistance à la flexion ou bien l'épaisseur de matériau change essentiellement de manière graduelle.

4. Appareil de cintrage selon l'une des revendications 1 à 3, **caractérisé en ce que** la résistance à la flexion ou bien l'épaisseur de matériau est le plus élevée au milieu de l'extension longitudinale de l'articulation.

5. Appareil de cintrage selon l'une des revendications 1 à 4, **caractérisé en ce que** l'épaisseur de matériau est réduite par une abrasion extérieure de matériau (51, 52, 53) à l'élément.

6. Appareil de cintrage selon l'une des revendications 1 à 5, **caractérisé en ce que** l'épaisseur de matériau est réduite par une abrasion intérieure de matériau dans l'élément, particulièrement par une exclusion par étapes ou une exclusion conique.

7. Appareil de cintrage selon l'une des revendications 1 à 6, **caractérisé en ce que** la partie supérieure de l'élément et la partie inférieure de l'élément sont couplées en une pièce l'une avec l'autre.

8. Appareil de cintrage selon la revendication 3, **caractérisé en ce que** la partie supérieure de l'élément et la partie inférieure de l'élément sont couplées par un arrangement de ressort à lames l'une avec l'autre.

9. Appareil de cintrage (4) pour la fabrication de corps de boîte, avec un élément de pré-cintrage (14) ou un élément de cintrage (13) comprenant une partie supérieure de l'élément (20) essentiellement fixe ayant des moyens de fixation (26) pour la fixation à l'appareil de cintrage, ou étant formée par une partie fixe de l'appareil de cintrage, une partie inférieure de l'élément (22) pour agir sur des tôles à cintrer dans l'appareil de cintrage, un arrangement d'articulation (21) à l'aide duquel la partie inférieure de l'élément est couplée de manière articulée avec la partie supérieure de l'élément, et aussi un élément d'actionnement (23) à l'aide duquel la partie inférieure de l'élément peut être déviée de sorte à permettre de pressuriser différemment les tôles à cintrer, particulièrement selon l'une des revendications 1 à 8, **caractérisé en ce que** la fente de séparation (21') entre la partie supérieure de l'élément (20) et la partie inférieure de l'élément (22), qui s'ensuit à l'articulation de l'arrangement d'articulation, s'étend avec une déviation par rapport à la direction horizontale et le bout de fente de séparation opposé à l'articulation est situé au dessus de l'articulation par rapport à la direction horizontale, la fente de séparation s'étendant de manière oblique par rapport à la direction horizontale.

10. Appareil de cintrage (13) selon l'une des revendications 1 à 9, **caractérisé en ce que** la surface de l'élément orientée vers le rouleau de cintrage (11) de l'appareil de cintrage (4) a une section concave (55) et particulièrement arrondie de manière concave et particulièrement en forme d'enveloppe de cylindre (55).

11. Appareil de cintrage (4) selon l'une des revendications 1 à 10, en outre comprenant une commande (5) pour actionner l'élément de pré-cintrage dépendant d'une valeur d'entrée et/ou d'une valeur prédéfinie ou dépendant d'une valeur de mesure de la caractéristique de tôle de chaque tôle à cintrer.

12. Dispositif de soudure pour des boîtes, avec une barre en forme de Z pour le positionnement des bords des corps de boîte et avec des rouleaux de soudure, particulièrement avec des électrodes à fil intermédiaires, comprenant un appareil de cintrage selon l'une des revendications 1 à 11.
